# EUROPEAN PATENT APPLICATION

(11) **EP 4 667 291 A1**
(43) Date of publication of application: **24.12.2025**
(21) Application number: 25166909.9
(22) Date of filing: 28.03.2025
(51) Int. Cl.: B60R 9/045, B60R 9/06, B60R 9/10

(54) **BALL-CLAMPING CARRYING RACK CONNECTING DEVICE**

(30) Priority: 17.06.2024 US 202463660586 P
(71) Applicant: King Rack Industrial Co., Ltd., Taichung City (TW)
(72) Inventor: WANG, CHIU-KUEI, 437 Taichung City (TW); ESPESSET, HUGUES, 81160 ST Juery (FR); FRÉDÉRIC, GIROD, 81160 ST Juery (FR)
(74) Representative: Müller Hoffmann & Partner

(57) **Abstract**

A ball-clamping carrying rack connecting device (10), connectable to a trailer hitch ball, includes a swivel arm bracket (101) and a corresponding coupling base (102). The swivel arm bracket (101) includes a first swivel arm (1011) and a second swivel arm (1012), which are rotatable relative to each other and capable of being unfolded to a predetermined angle. The first swivel arm (1011) has a trailer hitch ball connecting seat engageable with the trailer hitch ball. The second swivel arm (1012) has a coupling base including a top abutment portion and a plurality of mounting through holes. The corresponding coupling base (102) includes: a positioning crossbar (1021); and a plurality of fixing holes on opposite sides of the corresponding coupling base (102). In operation, at least one fixing screw and one fixing pin are configured to pass through the plurality of mounting through holes and the plurality of fixing holes to secure the corresponding coupling base (102) to the coupling base.

## Description

### FIELD

The present disclosure relates generally to a vehicle accessory, and more particularly to a ball-clamping carrying rack connecting device that is configured to be mounted on a trailer hitch ball located at a rear end of a vehicle, where the ball-clamping carrying rack connecting device is primarily used for connecting various vehicle carrying racks, such as bicycle racks, luggage racks, or other outdoor sports equipment racks.

### BACKGROUND

Currently available vehicle carrying racks in the market often require the installation of additional dedicated brackets at the rear end of the vehicle, with the installation process being complicated and time-consuming. While some carrying racks may be directly installed on the factory trailer hitch, these products typically feature complex structures that are not only inconvenient to install but also prone to loosening during use, thus posing safety risks.

Furthermore, most existing carrying rack connecting devices adopt a fixed design, which lacks flexibility. Such design often necessitates the complete removal of the carrying rack when access to trunk of the vehicle is required, resulting in significant inconvenience for users. Although some products feature a rotational function, their rotational structures are often fragile and lack reliable locking mechanisms, thus leading to wobbling or deformation during use.

In addition, traditional carrying rack connecting devices often require specialized tools for installation or removal, which is inconvenient for general users. Moreover, these devices tend to be heavy, making them difficult to transport and store, thus producing further challenges to users.

Therefore, there is an urgent need to provide a carrying rack connecting device that is easy to install, structurally stable, and offers good flexibility.

### SUMMARY

In view of the above, it is necessary to provide a ball-clamping carrying rack connecting device that may be quickly and securely mounted on a trailer hitch ball located at a rear end of a vehicle.

According to the present disclosure, a ball-clamping carrying rack connecting device configured to connect to a trailer hitch ball located at a rear end of a vehicle is provided. The ball-clamping carrying rack connecting device may include a swivel arm bracket, including: a first swivel arm provided with a trailer hitch ball connecting seat disposed at a bottom portion of the first swivel arm, and the trailer hitch ball connecting seat configured to engage with the trailer hitch ball; a second swivel arm provided with a first end rotatably connected to the first swivel arm and a second end including a coupling base, where the coupling base may include a top abutment portion formed on a top surface of the coupling base and a plurality of mounting through holes formed on a side portion of the coupling base, where the first swivel arm and the second swivel arm may be configured to rotate relative to each other and unfold to a predetermined angle; and a corresponding coupling base including: a positioning crossbar and a plurality of fixing holes formed on opposite sides of the corresponding coupling base, the plurality of fixing holes being configured to detachably receive at least one fixing screw and one fixing pin; where the corresponding coupling base may be configured to abut against the top abutment portion of the coupling base through the positioning crossbar, and where the fixing screw and fixing pin may be configured to pass through the plurality of fixing holes and the plurality of mounting through holes to secure the corresponding coupling base to the coupling base.

In one implementation, the corresponding coupling base may include two symmetrically disposed blocking plates, and the plurality of fixing holes may be formed on one side of each of the blocking plates, and the positioning crossbar may be disposed between the blocking plates to define a gap therebetween, such that when the corresponding coupling base may be connected to the coupling base, the blocking plates may be correspondingly secured to an outer portion of the coupling base through the fixing screw and the fixing pin.

In one implementation, the coupling base further may include a fixed protruding tube, and when the corresponding coupling base may be connected to the coupling base, the fixed protruding tube may be configured to be tightly encompassed by the blocking plates.

In one implementation, the first swivel arm further may include a support stand, the support stand being configured to rotate relative to the first swivel arm to a vertical position or a parallel position.

In one implementation, the first swivel arm further may include a set of auxiliary wheels disposed at the bottom portion.

In one implementation, the second swivel arm further may include a fastener disposed in an insertion hole of the second swivel arm, the first swivel arm may be formed with a first through hole, and the second swivel arm may be formed with a second through hole, such that when the first swivel arm and the second swivel arm may be relatively close to each other, the first through hole and the second through hole may be aligned to allow the fastener to simultaneously pass both the first through hole and the second through hole.

In one implementation, the predetermined angle may be an angle from 0 degrees to 180 degrees.

In one implementation, the trailer hitch ball connecting seat may include a connecting port having a concave shape configured to accommodate the trailer hitch ball.

In one implementation, the corresponding coupling base may be configured to be detachably connected to a carrying rack.

In one implementation, the corresponding coupling base may be integrally formed with a carrying rack.

In one implementation, the second swivel arm may be further provided with a suspension ring, and the first swivel arm may be further provided with a lateral support extending from one end of the bottom portion, such that when the predetermined angle between the first swivel arm and the second swivel arm may be 0 degrees, the lateral support may be configured to pass through the suspension ring and the first swivel arm may be supported by the suspension ring.

In one implementation, the support stand may include a first support tube, a second support tube, and a positioning member, where the first support tube may be configured to be accommodated within the second support tube, the first support tube may be provided with a positioning hole on an exterior thereof, and the second support tube may be provided with a positioning slot on an exterior thereof corresponding to the positioning hole, the positioning slot being formed with a plurality of positioning notches.

### BRIEF DESCRIPTION OF THE DRAWINGS

To enhance clarity regarding the technical solutions presented in the implementations of the present disclosure or in the prior art, a brief overview of the drawings necessary for describing the implementations or the prior art will be given below. It is important to note that the drawings outlined below are merely some implementations of the present disclosure, and other drawings may be obtained by those skilled in the art based on these drawings without creative efforts.
FIG. 1 is a perspective view of a ball-clamping carrying rack connecting device according to the present disclosure.
FIG. 2 is another perspective view of the ball-clamping carrying rack connecting device according to the present disclosure.
FIG. 3 is an exploded view of the ball-clamping carrying rack connecting device according to the present disclosure.
FIG. 4 shows a swivel arm bracket in a first unfolded state according to the present disclosure.
FIG. 5 shows the swivel arm bracket in a second unfolded state according to the present disclosure.
FIG. 6 shows a position of a second through hole on a second swivel arm according to the present disclosure.
FIG. 7 shows a position of a first through hole on a first swivel arm according to the present disclosure.
FIG. 8 shows a position of an insertion hole on the second swivel arm according to the present disclosure.
FIG. 9 is a perspective view showing a locked state of the first swivel arm and the second swivel arm secured by a fastener according to the present disclosure.
FIG. 10 shows a structure of a support stand and a rotating member according to the present disclosure.
FIG. 11 shows a rotation of the support stand according to the present disclosure.
FIG. 12 is a perspective view showing the support stand upright on the ground according to the present disclosure.
FIG. 13 is a first perspective view showing the structure of the support stand according to the present disclosure.
FIG. 14 is a second perspective view showing the structure of the support stand according to the present disclosure.
FIG. 15 is a perspective view showing the support stand in a first state of length adjustment according to the present disclosure.
FIG. 16 is a perspective view showing the support stand in a second state of length adjustment according to the present disclosure.
FIG. 17 is a perspective view showing connectability between a corresponding coupling base and a carrying rack according to the present disclosure.
FIG. 18 shows a structure of a trailer hitch ball connecting seat according to the present disclosure.
FIG. 19 shows a connection between the trailer hitch ball connecting seat and a trailer hitch ball according to the present disclosure.
FIG. 20 shows the ball-clamping carrying rack connecting device with the carrying rack mounted at a rear end of a vehicle according to the present disclosure.
FIG. 21 shows the swivel arm bracket unfolded at a 90-degree angle relative to the rear end of the vehicle according to the present disclosure.
FIG. 22 shows the swivel arm bracket unfolded at a 180-degree angle relative to the rear end of the vehicle according to the present disclosure.
FIG. 23 shows positions of a suspension ring and a lateral support according to the present disclosure.
FIG. 24 shows another connecting method between the corresponding coupling base and a coupling base according to the present disclosure.
FIG. 25 is a perspective view of another connecting method between the corresponding coupling base and the coupling base according to the present disclosure.
FIG. 26 is a perspective view showing the carrying rack stored by another connecting method between the corresponding coupling base and the coupling base according to the present disclosure.
FIG. 27 is a first perspective view showing a structure of a warning module of the carrying rack according to the present disclosure.
FIG. 28 is a second perspective view showing the structure of the warning module of the carrying rack according to the present disclosure.
FIG. 29 shows a state before a fixing long bolt secures the first swivel arm and the second swivel arm according to the present disclosure.
FIG. 30 shows a state after the fixing long bolt secures the first swivel arm and the second swivel arm according to the present disclosure.

### DETAILED DESCRIPTION

The following provides a detailed description of implementations of the present disclosure with reference to the drawings.

The descriptions below include specific information pertaining regarding exemplary implementations of the present disclosure. The drawings and their accompanying detailed description pertain only to these exemplary implementations. However, the present disclosure is not limited to these exemplary implementations. Those skilled in the art will recognize other variations and implementations of the present disclosure. Furthermore, the drawings and illustrations in the present disclosure are generally not drawn to scale and may not correspond to actual relative dimensions.

For consistency and ease of understanding, the same features are designated by the same reference numerals in the exemplary drawings. However, features in different implementations may vary in other aspects and should not be narrowly construed as limited to the features shown in the drawings.

The terms used in the present disclosure are solely for describing particular implementations and are not intended to limit the scope of the present disclosure. Unless otherwise specified, singular forms such as "a," "the," and "said" also include plural forms. The terms "comprise," "comprises," "comprising," "include," "includes," "including," "have," "has," or "having" used herein specify the presence of a feature, region, integer, step, operation, element, and/or component, but do not preclude the presence or addition of one or more other features, regions, integers, steps, operations, elements, components, and/or groups thereof.

The term "and/or" includes any and all combinations of one or more of the associated listed items. Although terms such as "first," "second," and "third" may be used herein to describe various elements, components, regions, parts and/or sections, these elements, components, regions, parts and/or sections should not be limited by these terms. These terms are used merely to distinguish one element, component, region, part or section from another element, component, region, layer or section. Accordingly, without departing from the teachings of the present disclosure, a first element, component, region, part or section discussed below may also be referred to as a second element, component, region, layer or section.

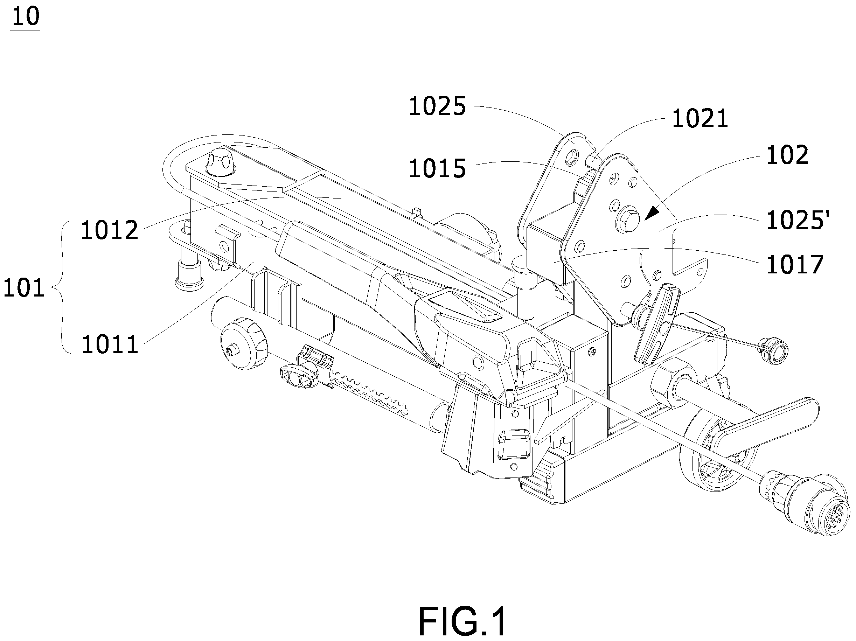

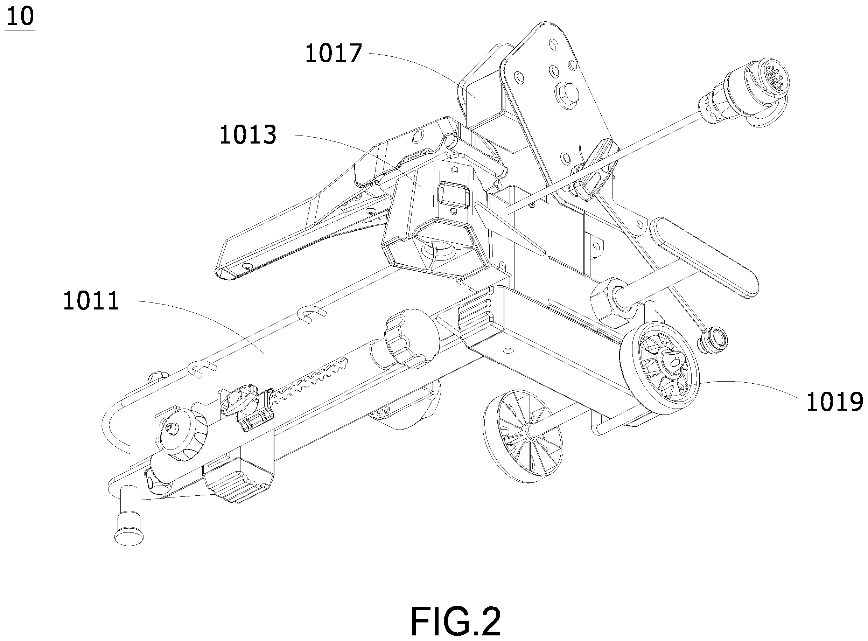

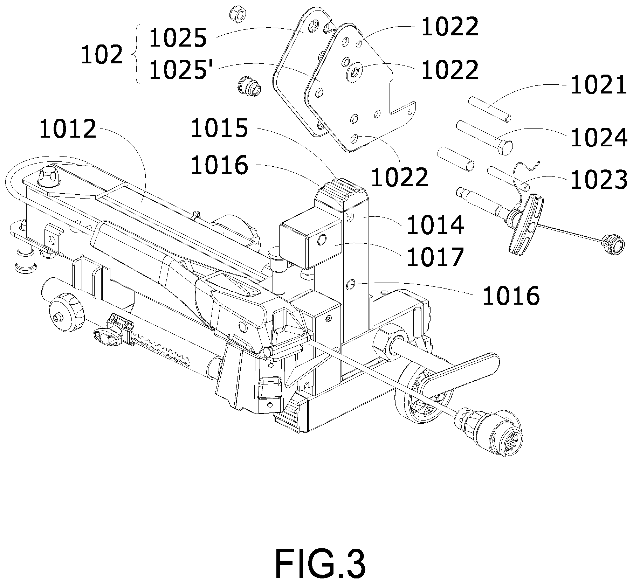

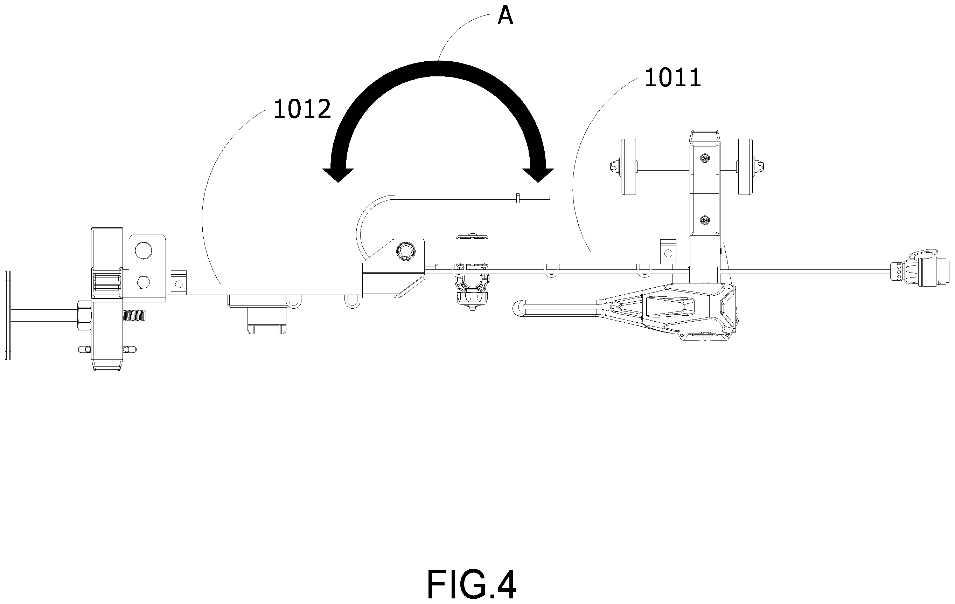

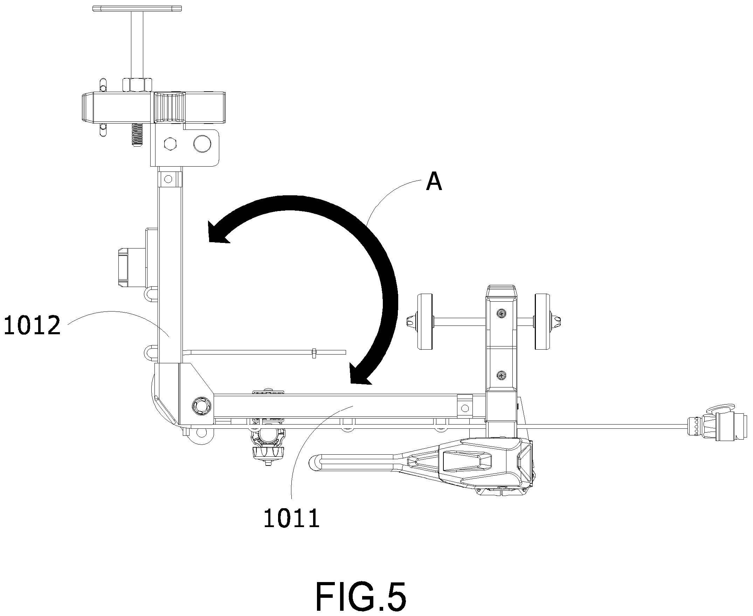

Referring to FIG. 1, which is a perspective view of the present disclosure. A ball-clamping carrying rack connecting device 10 may primarily include a swivel arm bracket 101 and a corresponding coupling base 102, where the swivel arm bracket 101 and the corresponding coupling base 102 are typically combined as an integral unit. The swivel arm bracket 101 may mainly include a first swivel arm 1011 and a second swivel arm 1012. Further referring to FIG. 2, which is another perspective view of the ball-clamping carrying rack connecting device. The first swivel arm 1011 may be provided with a trailer hitch ball connecting seat 1013 at a bottom portion thereof. Further referring to FIG. 3, which is an exploded view of the ball-clamping carrying rack connecting device. The second swivel arm 1012 may be provided with a second end which may include a coupling base 1014, where the coupling base 1014 may include a top abutment portion 1015 formed on a top surface of the coupling base 1014 and a plurality of mounting through holes 1016 formed on a side portion of the coupling base 1014. Further referring to FIG. 4, which shows the swivel arm bracket 101 in a first unfolded state. The second swivel arm 1012 may be provided with a first end rotatably connected to the first swivel arm 1011, that is, the first swivel arm 1011 and the second swivel arm 1012 may be configured to rotate relative to each other, thus allowing the first swivel arm 1011 and the second swivel arm 1012 to be unfolded to a predetermined angle A. The predetermined angle A, as shown in FIG. 5, shows the swivel arm bracket 101 in a second unfolded state. As shown in FIG. 4 and FIG. 5, for the swivel arm bracket 101 including the first swivel arm 1011 and the second swivel arm 1012, the predetermined angle A may be an angle from 0 degrees to 180 degrees. Specifically, the first swivel arm 1011 and the second swivel arm 1012 may be unfolded to a 180-degree state as shown in FIG. 4, a 90-degree state as shown in FIG. 5, or completely folded relative to each other.

Further referring to FIG. 1, FIG. 2, and FIG. 3, the corresponding coupling base 102 may be provided with a positioning crossbar 1021, and a plurality of fixing holes 1022 that may be formed on opposite sides of the corresponding coupling base 102, where the plurality of fixing holes 1022 may be configured to detachably receive at least one fixing screw 1023 and one fixing pin 1024. When the swivel arm bracket 101 is to be connected to the corresponding coupling base 102, the positioning crossbar 1021 of the corresponding coupling base 102 may first be positioned to abut against the top abutment portion 1015 of the coupling base 1014. This initial positioning between the positioning crossbar 1021 and the top abutment portion 1015 establishes a pre-assembled state, facilitating smoother subsequent assembly of the components. Once the pre-assembled state between the positioning crossbar 1021 and the top abutment portion 1015 is achieved, the fixing screw 1023 and the fixing pin 1024 may respectively pass through the plurality of fixing holes 1022 and plurality of mounting through holes 1016 to secure the corresponding coupling base 102 to the coupling base 1014, thus completely assembled as an integral unit, as shown in FIG. 1.

Further referring to FIG. 3, in one implementation, the corresponding coupling base 102 may further include two symmetrically disposed blocking plates 1025 and 1025', where the plurality of fixing holes 1022 may be formed on one side of each of the blocking plates 1025 and 1025'. The positioning crossbar 1021 may be disposed between the two blocking plates 1025 and 1025' to define a gap therebetween, that is, the two blocking plates 1025 and 1025' may be spaced apart from each other. When the corresponding coupling base 102 is connected to the coupling base 1014, the two blocking plates 1025 and 1025' may be respectively secured to an outer portion of the coupling base 1014 through the fixing screw 1023 and the fixing pin 1024, such that the two blocking plates 1025 and 1025' encompass the outer portion of the coupling base 1014 (as shown in FIG. 1).

Further referring to FIG. 1 and FIG. 3, in one implementation, the coupling base 1014 may further include a fixed protruding tube 1017, where the fixed protruding tube 1017 may be a tubular protruding laterally from the coupling base 1014. When the corresponding coupling base 102 is connected to the coupling base 1014, the fixed protruding tube 1017 may be positioned between the two blocking plates 1025 and 1025' to be tightly encompassed by the two blocking plates 1025 and 1025'. This arrangement functions to minimize any gap formed between the coupling base 1014 and the corresponding coupling base 102 when connected, thus preventing wobbling between the swivel arm bracket 101 and the corresponding coupling base 102 after assembly, and enhancing the overall structural stability.

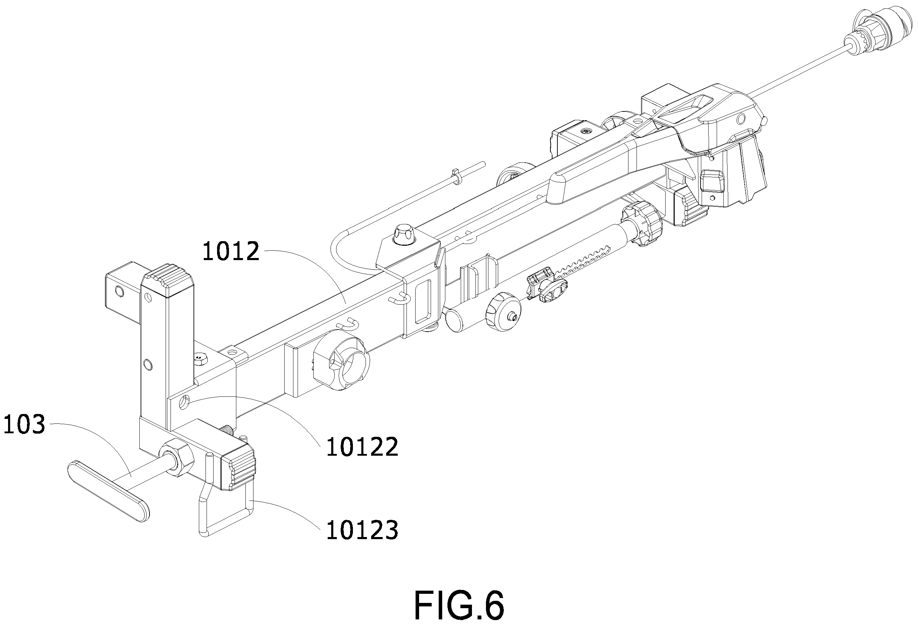

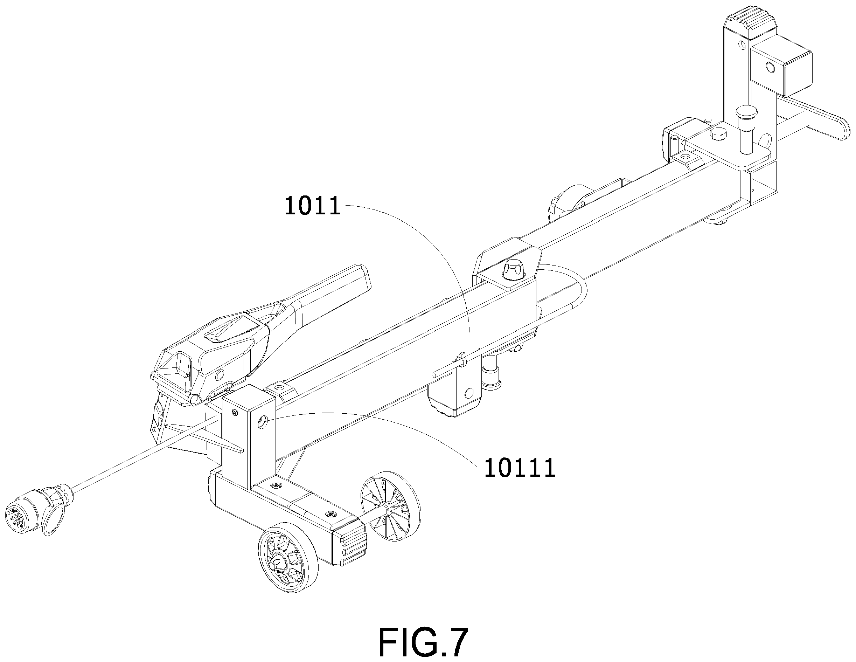

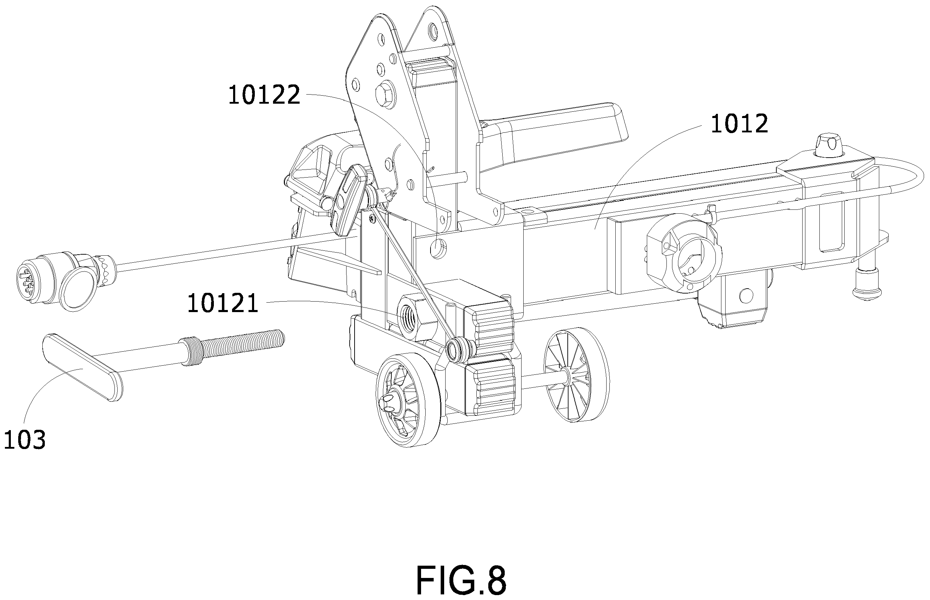

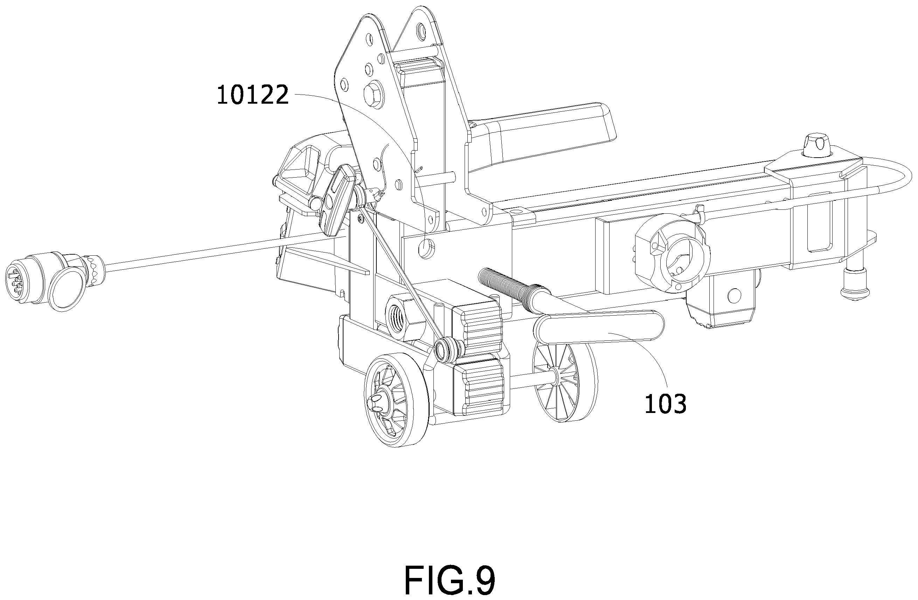

Referring to FIG. 6, FIG. 7, FIG. 8, and FIG. 9, in one implementation, the second swivel arm 1012 may further include a fastener 103, where the fastener 103 may be disposed in an insertion hole 10121 of the second swivel arm 1012. The fastener 103 may be typically assembled within the insertion hole 10121 for easy access by a user. The first swivel arm 1011 may be formed with a first through hole 10111, and the second swivel arm 1012 may be formed with a second through hole 10122 corresponding to the first through hole 10111. When the first swivel arm 1011 and the second swivel arm 1012 are relatively close to each other (e.g., when the predetermined angle A is 0 degrees), the first through hole 10111 and the second through hole 10122 may be concentrically aligned, thus allowing the user to insert the fastener 103 through both the first through hole 10111 and the second through hole 10122 to achieve a locked state. This arrangement secures the first swivel arm 1011 and the second swivel arm 1012 to prevent them from unfolding, thus avoiding any inconvenience caused by the random unfolding of the first swivel arm 1011 when not in use.

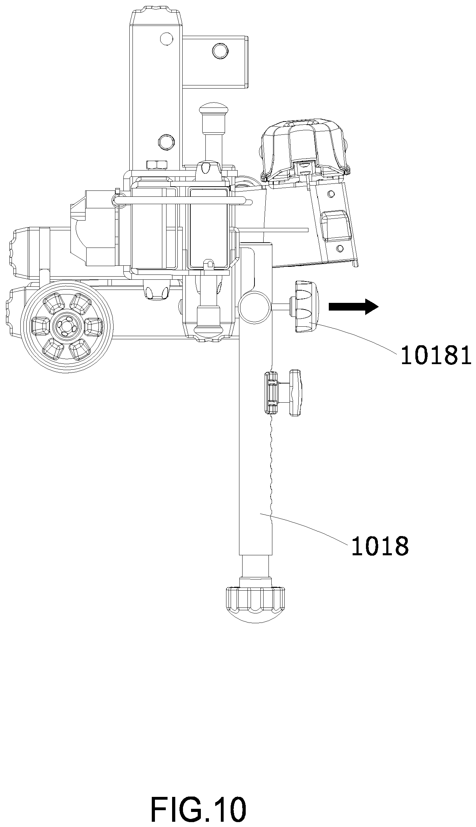

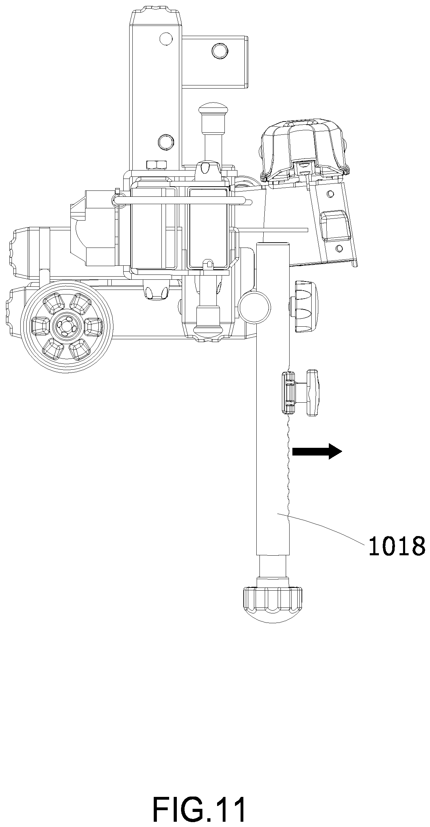

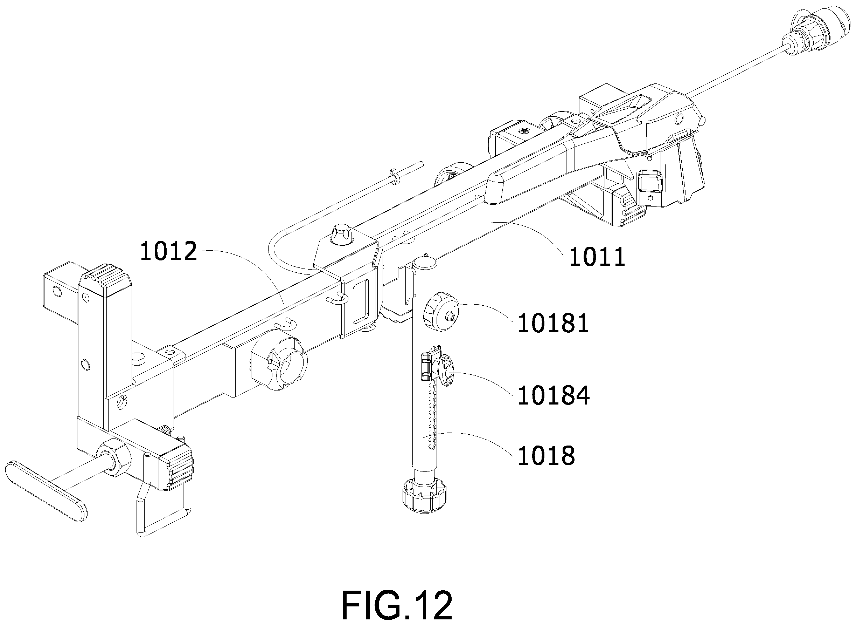

Referring to FIG. 10, FIG. 11, and FIG. 12, in one implementation, the first swivel arm 1011 may further include a support stand 1018, where the support stand 1018 may be secured by a rotating member 10181 to be rotatably connected to the first swivel arm 1011. The support stand 1018 may be configured to rotate relative to the first swivel arm 1011 to a vertical position or a parallel position. When not in use, the support stand 1018 may be typically stored parallel to the first swivel arm 1011 (as shown in FIG. 2). When the support stand 1018 is to be positioned on the ground, the rotating member 10181 may first be loosened by rotating in a direction indicated by the arrow shown in FIG. 10. At this point, as shown in FIG. 11, the support stand 1018 may be moved forward and rotated to stand upright on the ground, thus allowing the support stand 1018 to be positioned perpendicular to the first swivel arm 1011. The state of the support stand 1018 standing upright on the ground is shown in FIG. 12. As shown in FIG. 12, when the first swivel arm 1011 and the second swivel arm 1012 are unfolded, the support stand 1018 standing upright on the ground may effectively provide sufficient support for the first swivel arm 1011 and the second swivel arm 1012, thus preventing the swivel arm bracket 101 from tipping over when unfolded.

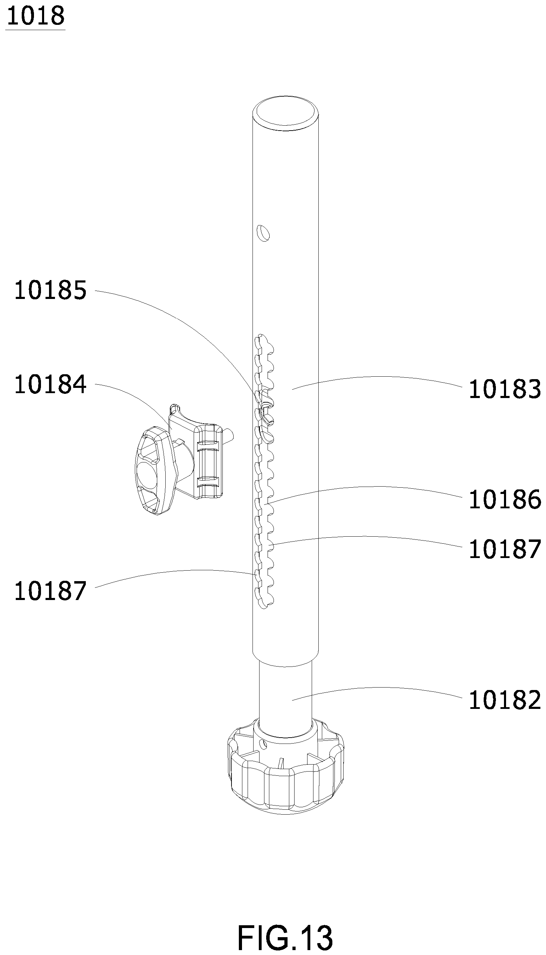

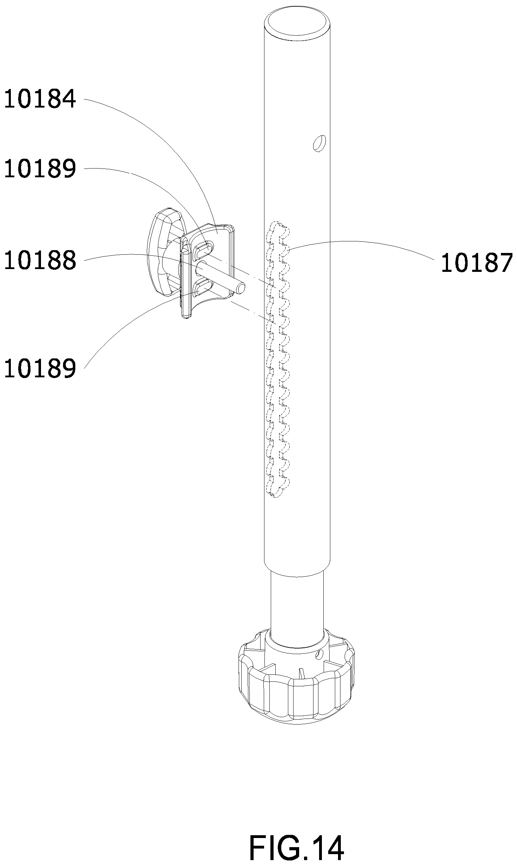

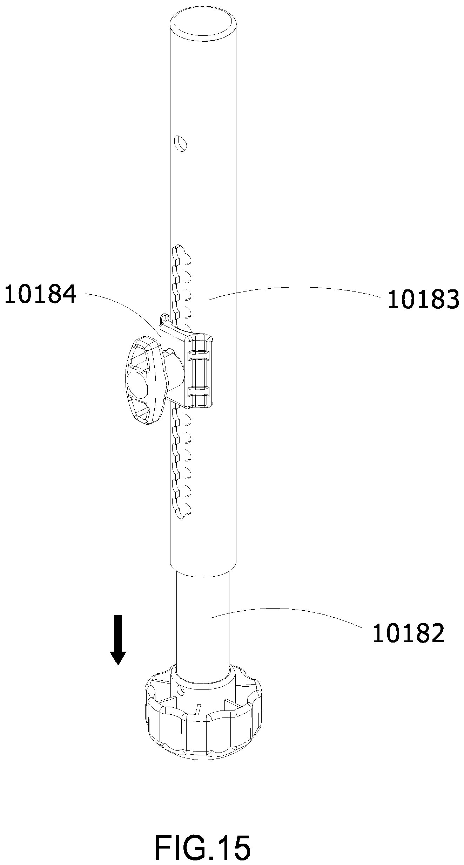

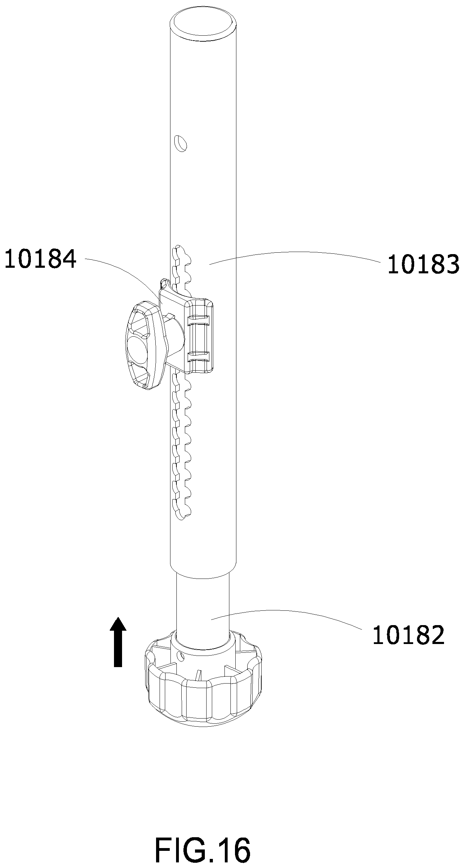

Referring to FIG. 13, in one implementation, the support stand 1018 may further include a first support tube 10182, a second support tube 10183, and a positioning member 10184. The first support tube 10182 may have a smaller diameter than the second support tube 10183, thus allowing the first support tube 10182 to be accommodated within an interior space of the second support tube 10183 for relative telescopic movement between the first support tube 10182 and the second support tube 10183. The first support tube 10182 may be provided with a positioning hole 10185 on an exterior thereof, and the second support tube 10183 may be provided with a positioning slot 10186, on an exterior of the second support tube 10183, that corresponds to the positioning hole 10185. The positioning slot 10186 may be formed with a plurality of positioning notches 10187 arranged vertically at equal intervals, and the positioning notches 10187 may be interconnected. Further referring to FIG. 14, the positioning member 10184 may be provided with a positioning rod 10188 and at least one positioning protrusion 10189 that is configured to engage with the positioning notches 10187. Preferably, the number of positioning protrusions 10189 may be two. As shown in FIG. 13 and FIG. 14, when the positioning member 10184 is connected to the second support tube 10183, the positioning rod 10188 may be inserted into the positioning hole 10185, and the positioning protrusion 10189 may be engaged with the positioning notch 10187, thus securing the positioning member 10184 to the exterior of the second support tube 10182, with the completed assembly being shown in FIG. 12. Further referring to FIG. 13 and FIG. 14, when adjusting a length of the support stand 1018 through the relative telescopic movement between the first support tube 10182 and the second support tube 10183, since the positioning member 10184 is typically secured to the exterior of the second support tube 10183, the positioning protrusion 10189 of the positioning member 10184 may first be disengaged from the positioning notch 10187 of the second support tube 10183 while maintaining the positioning rod 10188 inserted in the positioning hole 10185 of the first support tube 10182. At this point, the second support tube 10183 may be adjusted vertically relative to the first support tube 10182 to a desired height, or alternatively, the first support tube 10182 may be adjusted vertically relative to the second support tube 10183, with neither approach being limited herein. Once the desired length is determined, the positioning protrusion 10189 of the positioning member 10184 may be engaged with one of the positioning notches 10187 to secure the second support tube 10183 in position through the positioning member 10184. The states before and after the length adjustment of the first support tube 10182 and the second support tube 10183 are shown in FIG. 15 and FIG. 16, with arrows indicating the direction of telescopic movement. The overall length of the support stand 1018 may be adjusted through the relative telescopic movement of the first support tube 10182 and the second support tube 10183.

Further referring to FIG. 2, in one implementation, the first swivel arm 1011 may further include a set of auxiliary wheels 1019 disposed at the bottom portion of the first swivel arm 1011. The set of auxiliary wheels 1019 may allow the entire ball-clamping carrying rack connecting device 10 to be moved by pushing, thus facilitating installation of the ball-clamping carrying rack connecting device 10 by the user.

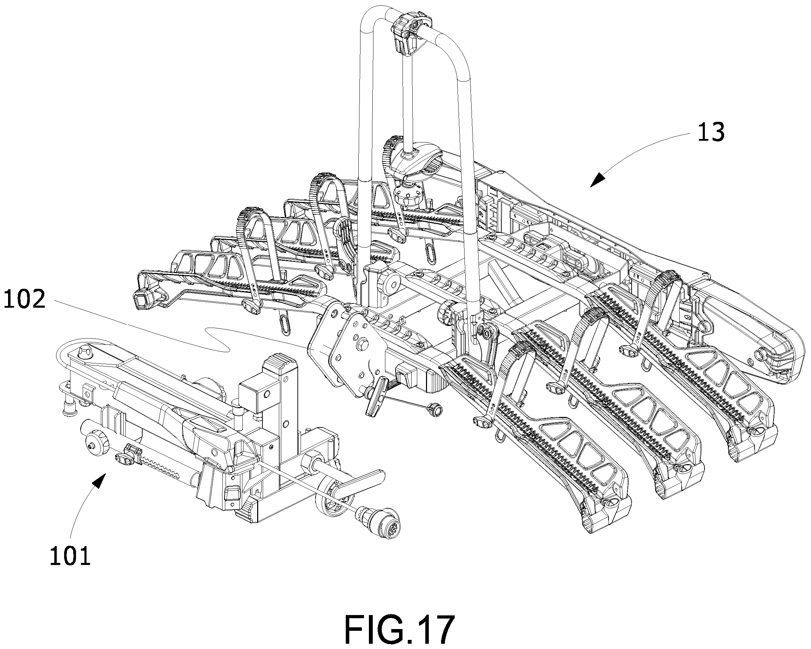

Referring to FIG. 17, which is a perspective view showing connection between the corresponding coupling base and the carrying rack. The corresponding coupling base 102 may be detachably connected to a carrying rack 13, or alternatively, the corresponding coupling base 102 may be integrally formed with the carrying rack 13. Moreover, the corresponding coupling base 102 may be connected to or assembled with any form of external equipment, such as trailers, without limitation thereto. Once the corresponding coupling base 102 is connected to the carrying rack 13, the corresponding coupling base 102 may then be assembled with the swivel arm bracket 101.

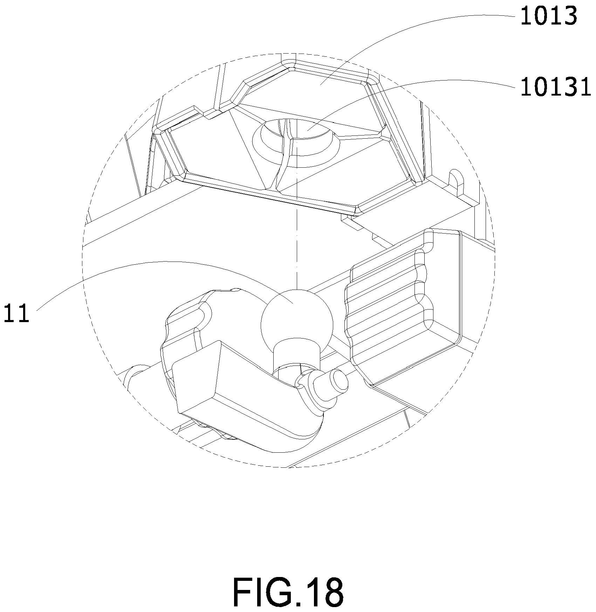

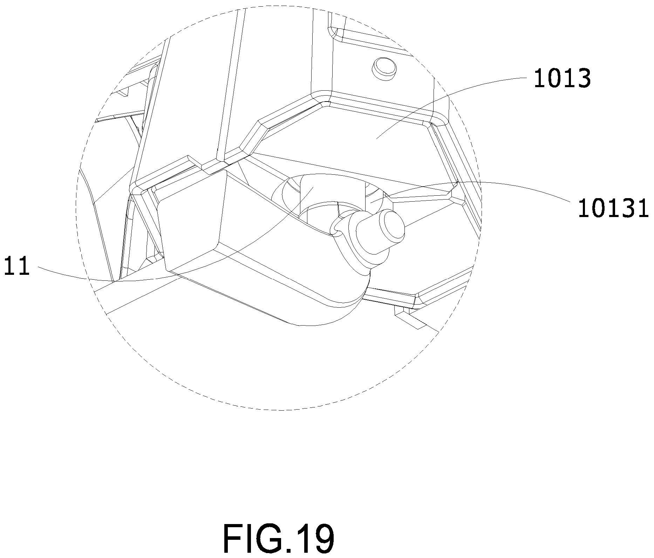

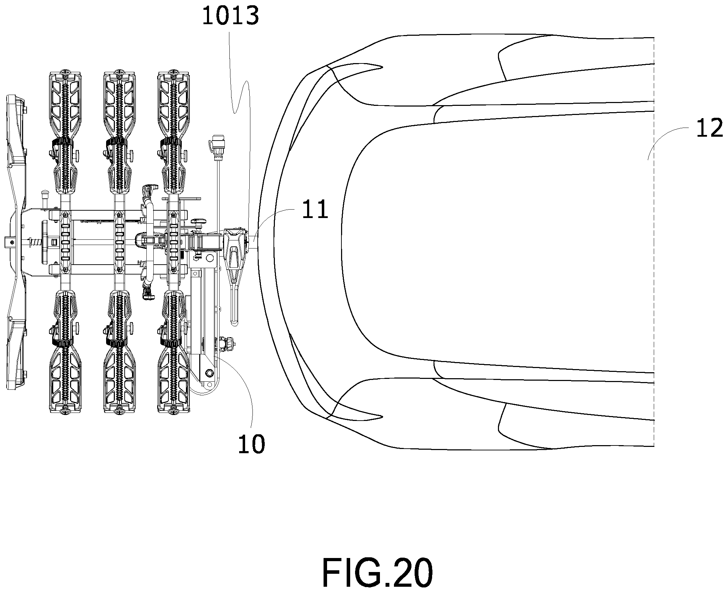

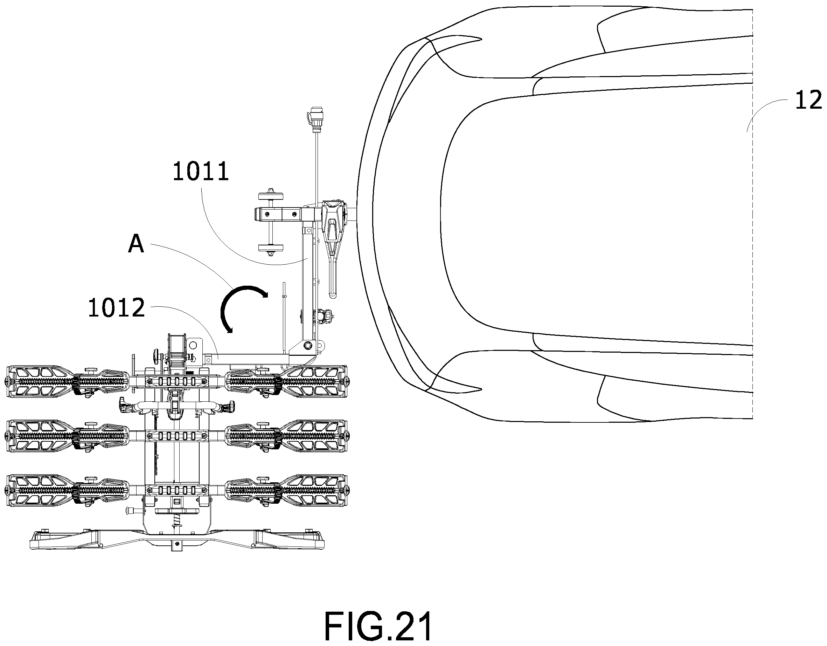

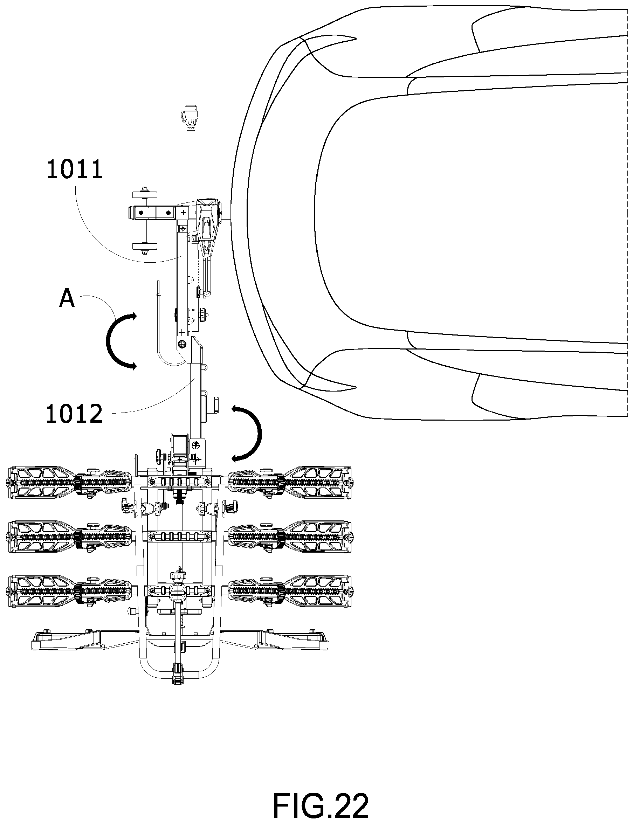

Further refer to FIG. 18 and FIG. 19. As shown in FIG. 18, the trailer hitch ball connecting seat 1013 may include a connecting port 10131 having a concave shape that is configured to accommodate a trailer hitch ball 11 located at a rear end of a vehicle 12. The trailer hitch ball 11 may be a spherical body typically connected to and protruding from a rear chassis of the vehicle 12. After the trailer hitch ball 11 is accommodated within the connecting port 10131 of the trailer hitch ball connecting seat 1013, the trailer hitch ball connecting seat 1013 may be operated to tightly clamp the trailer hitch ball 11. Further referring to FIG. 20, once the trailer hitch ball connecting seat 1013 is securely connected to the trailer hitch ball 11, the ball-clamping carrying rack connecting device 10, along with the carrying rack 13, may be typically secured to the rear end of the vehicle 12. When the user needs to access a rear trunk of the vehicle 12, the first swivel arm 1011 and the second swivel arm 1012 may be unfolded to a desired predetermined angle A. For example, as shown in FIG. 21, the first swivel arm 1011 and the second swivel arm 1012 may be unfolded to the predetermined angle A of 90 degrees, thus allowing the user to access items in the rear trunk of the vehicle 12. Alternatively, as shown in FIG. 22, the first swivel arm 1011 and the second swivel arm 1012 may also be unfolded to the predetermined angle A of 180 degrees.

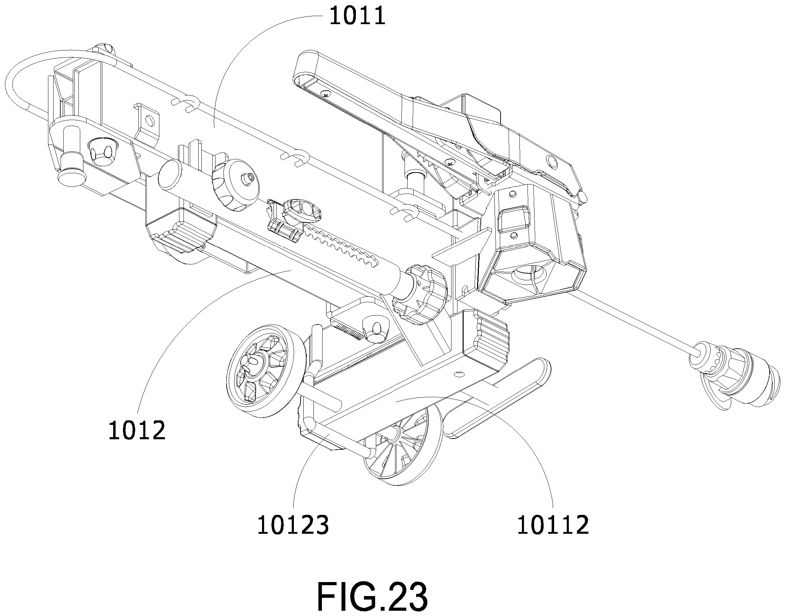

Referring to FIG. 6 and FIG. 23, the second swivel arm 1012 may be provided with a suspension ring 10123. When the predetermined angle A between the first swivel arm 1011 and the second swivel arm 1012 is 0 degrees, a lateral support 10112 extending from one end of the bottom portion of the first swivel arm 1011 may pass through the suspension ring 10123. This arrangement ensures a tightly fitted connection between the first swivel arm 1011 and the second swivel arm 1012, thus preventing any gap from widening due to external vibrations or forces during folding. Thus, this arrangement minimizes the risk of damage to the rotary arms.

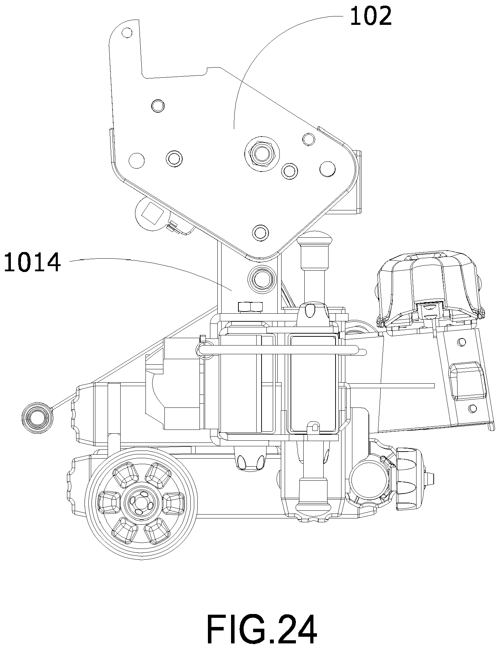

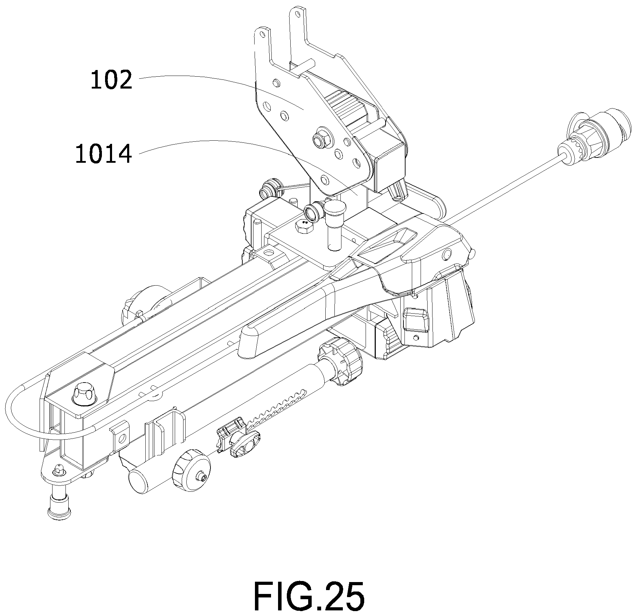

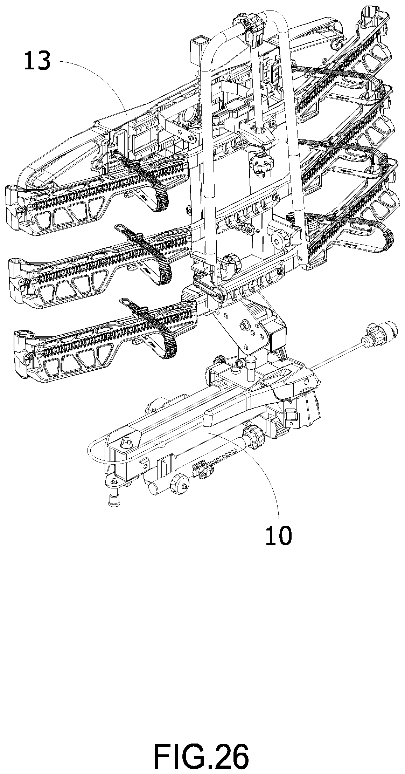

Refer to FIG. 24, FIG. 25, and FIG. 26, the corresponding coupling base 102 of the present disclosure may be assembled with the coupling base 1014 in different orientations and the completed assembly is shown as FIG. 24 and FIG. 25. This assembly differ from the assembled method of the corresponding coupling base 102 and the coupling base 1014, as shown in FIG. 2. The assembled method shown in FIG. 24 may primarily allow the carrying rack 13 to be positioned upright relative to the overall ball-clamping carrying rack connecting device 10. As shown in FIG. 26, this upright position of the carrying rack 13 facilitates storage when not in use, thus preventing interference with driving safety.

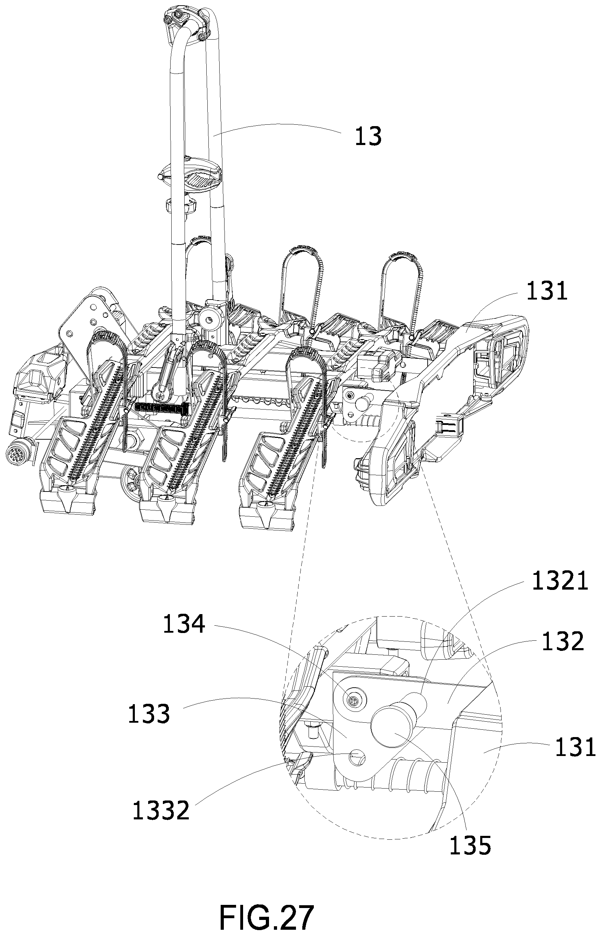

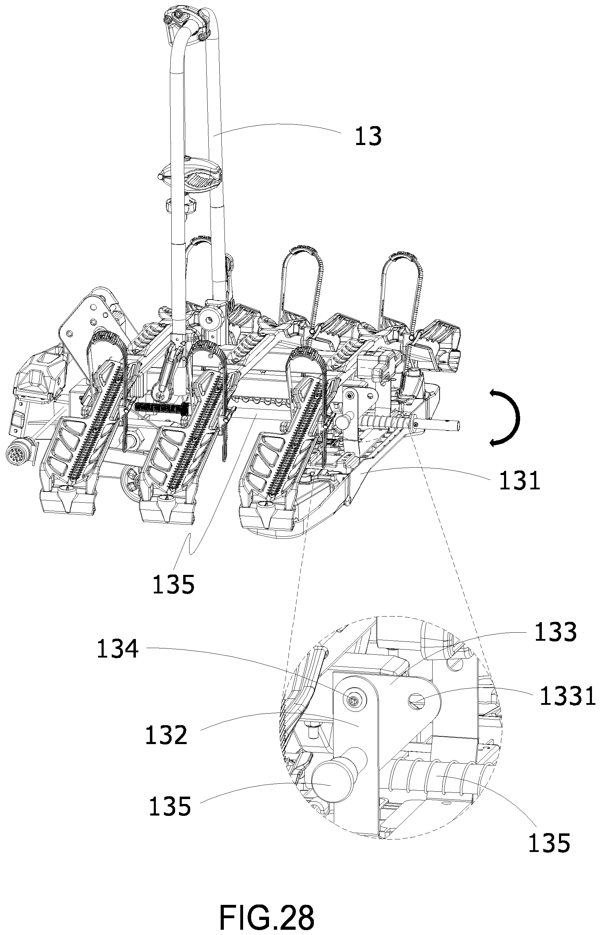

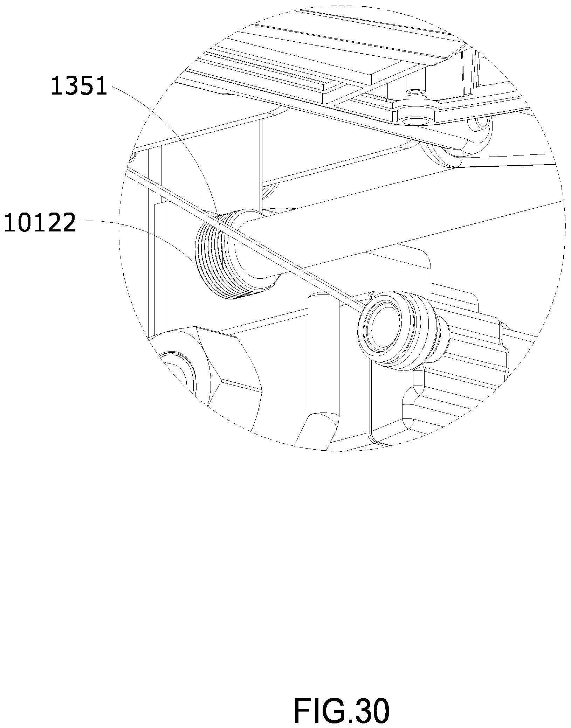

Referring to FIG. 27, FIG. 28, FIG. 29, and FIG. 30, the carrying rack 13 may be provided with a warning module 131, where the warning module 131 may be movably connected to a corresponding mounting bracket 133 of the carrying rack 13 through a connecting bracket 132. The connecting bracket 132 may be provided with a first fixing hole 1321, and the corresponding mounting bracket 133 may be provided with a second fixing hole 1331 and a third fixing hole 1332. As shown in FIG. 27 and FIG. 28, the connecting bracket 132 and the corresponding mounting bracket 133 may be pivotally connected through an axial rod 134, thus allowing relative rotation between the connecting bracket 132 and the corresponding mounting bracket 133. The connecting bracket 132 and the corresponding mounting bracket 133 may be positioned by a fixing rod 135. As shown in FIG. 26, the fixing rod 135 may pass through the first fixing hole 1321 and the second fixing hole 1331 to establish a first mode between the connecting bracket 132 and the corresponding mounting bracket 133, where the first mode is primarily used during vehicle movement. Furthermore, as shown in FIG. 27, after removing the fixing rod 135, the warning module 131 may be rotated downward relative to the carrying rack 13 to establish a second mode, and the fixing rod 135 may then be inserted through the first fixing hole 1031 and the third fixing hole 1332 to secure the connecting bracket 132 and the corresponding mounting bracket 133, thus preventing relative rotation between them through the fixing rod 135.

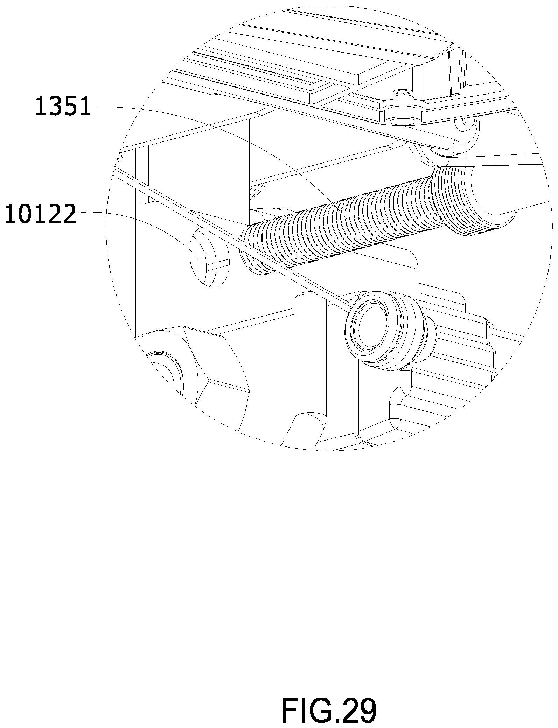

Referring to FIG. 28 and FIG. 29, the carrying rack 13 may be provided with a reciprocally movable fixing long bolt 135 at a bottom portion of the carrying rack 13. The fixing long bolt 135 may be formed with a threaded portion 1351 at one end, while the other end may be exposed in the second mode. Referring to FIG. 6, FIG. 7, FIG. 8, FIG. 9, FIG. 29, and FIG. 30, when the first through hole 10111 and the second through hole 10122 are concentrically aligned, the user may, in the second mode, rotate the end of the fixing long bolt 135 opposite to the threaded portion 1035, thus allowing the threaded portion 1351 of the fixing long bolt 135 to simultaneously pass through both the first through hole 10111 and the second through hole 10122 to achieve a locked state. This arrangement secures the first swivel arm 1011 and the second swivel arm 1012 to prevent them from unfolding, thus avoiding any inconvenience caused by random unfolding when the swivel arm bracket 101 is combined with the carrying rack 13.

In summary, the ball-clamping carrying rack connecting device 10 of the present disclosure may primarily include components configured to connect with the trailer hitch ball 11, thus allowing convenient installation on vehicles that are equipped with the trailer hitch ball 11. Through a connection between the corresponding coupling base 102 of the present disclosure and the carrying rack 13 or other carrying devices, the present disclosure achieves convenience in installation on vehicles that are equipped with the trailer hitch ball 11 structure.

The above detailed description of implementations of the present disclosure has been provided with reference to the drawings. However, the specific construction is not limited to these implementations and may include design modifications within the claimed subject-matter. Furthermore, various modifications may be made within the claimed subject-matter, and implementations obtained by appropriately combining technical means disclosed in different implementations are also included. Moreover, alternative constructions obtained by exchanging elements described in the above implementations that achieve the same effects are also included.

## Claims

1. A ball-clamping carrying rack connecting device (10) configured to connect to a trailer hitch ball (11) located at a rear end of a vehicle (12), the ball-clamping carrying rack connecting device (10) comprising:
a swivel arm bracket (101), comprising:
a first swivel arm (1011) provided with a trailer hitch ball connecting seat (1013) disposed at a bottom portion of the first swivel arm (1011), and the trailer hitch ball connecting seat (1013) configured to engage with the trailer hitch ball (11);
a second swivel arm (1012) provided with a first end rotatably connected to the first swivel arm (1011) and a second end comprising a coupling base (1014), wherein the coupling base (1014) comprises a top abutment portion (1015) formed on a top surface of the coupling base (1014) and a plurality of mounting through holes (1016) formed on a side portion of the coupling base (1014), wherein the first swivel arm (1011) and the second swivel arm (1012) are configured to rotate relative to each other and unfold to a predetermined angle (A); and
a corresponding coupling base (102) comprising: a positioning crossbar (1021) and a plurality of fixing holes (1022) formed on opposite sides of the corresponding coupling base (102), the plurality of fixing holes (1022) being configured to detachably receive at least one fixing screw (1023) and one fixing pin (1024);
wherein the corresponding coupling base (102) is configured to abut against the top abutment portion (1015) of the coupling base (1014) through the positioning crossbar (1021), and wherein the fixing screw (1023) and fixing pin (1024) are configured to pass through the plurality of fixing holes (1022) and the plurality of mounting through holes (1016) to secure the corresponding coupling base (102) to the coupling base (1014).

2. The ball-clamping carrying rack connecting device (10) of claim 1, wherein the corresponding coupling base (102) comprises two symmetrically disposed blocking plates (1025, 1025'), and the plurality of fixing holes (1022) are formed on one side of each of the blocking plates (1025, 1025'), and the positioning crossbar (1021) is disposed between the blocking plates (1025, 1025') to define a gap therebetween, such that when the corresponding coupling base (102) is connected to the coupling base (1014), the blocking plates (1025, 1025') are correspondingly secured to an outer portion of the coupling base (1014) through the fixing screw (1023) and the fixing pin (1024).

3. The ball-clamping carrying rack connecting device (10) of claim 2, wherein the coupling base (1014) further comprises a fixed protruding tube (1017), and when the corresponding coupling base (102) is connected to the coupling base (1014), the fixed protruding tube (1017) is configured to be tightly encompassed by the blocking plates (1025, 1025').

4. The ball-clamping carrying rack connecting device (10) of any one of claims 1 to 3, wherein the first swivel arm (1011) further comprises a support stand (1018), the support stand (1018) being configured to rotate relative to the first swivel arm (1011) to a vertical position or a parallel position.

5. The ball-clamping carrying rack connecting device (10) of claim 4, wherein the support stand (1018) comprises a first support tube (10182), a second support tube (10183), and a positioning member (10184), wherein the first support tube (10182) is configured to be accommodated within the second support tube (10183), the first support tube (10182) is provided with a positioning hole (10185) on an exterior thereof, and the second support tube (10183) is provided with a positioning slot (10186) on an exterior thereof corresponding to the positioning hole (10185), the positioning slot (10186) being formed with a plurality of positioning notches (10187).

6. The ball-clamping carrying rack connecting device (10) of any one of claims 1 to 5, wherein the first swivel arm (1011) further comprises a set of auxiliary wheels (1019) disposed at the bottom portion.

7. The ball-clamping carrying rack connecting device (10) of any one of claims 1 to 6, wherein the second swivel arm (1012) further comprises a fastener (103) disposed in an insertion hole (10121) of the second swivel arm (1012), the first swivel arm (1011) is formed with a first through hole (10111), and the second swivel arm (1012) is formed with a second through hole (10122), such that when the first swivel arm (1011) and the second swivel arm (1012) are relatively close to each other, the first through hole (10111) and the second through hole (10122) are aligned to allow the fastener (103) to simultaneously pass both the first through hole (10111) and the second through hole (10122).

8. The ball-clamping carrying rack connecting device (10) of any one of claims 1 to 7, wherein the predetermined angle (A) is an angle from 0 degrees to 180 degrees.

9. The ball-clamping carrying rack connecting device (10) of any one of claims 1 to 8, wherein the trailer hitch ball connecting seat (1013) comprises a connecting port (10131) having a concave shape configured to accommodate the trailer hitch ball (11).

10. The ball-clamping carrying rack connecting device (10) of any one of claims 1 to 9, wherein the corresponding coupling base (102) is configured to be detachably connected to a carrying rack (13).

11. The ball-clamping carrying rack connecting device (10) of any one of claims 1 to 9, wherein the corresponding coupling base (102) is integrally formed with a carrying rack (13).

12. The ball-clamping carrying rack connecting device (10) of any one of claims 1 to 11, wherein the second swivel arm (1012) is further provided with a suspension ring (10123), and the first swivel arm (1011) is further provided with a lateral support (10112) extending from one end of the bottom portion, such that when the predetermined angle (A) between the first swivel arm (1011) and the second swivel arm (1012) is 0 degrees, the lateral support (10112) is configured to pass through the suspension ring (10123) and the first swivel arm (1011) is supported by the suspension ring (10123).
